Europäisches Patentamt

European Patent Office

Office européen des brevets

(19)

(11)  EP 0 900 390 B1

(12)  FASCICULE DE BREVET EUROPEEN

(45) Date de publication et mention
de la délivrance du brevet:
**02.02.2000  Bulletin 2000/05**

(21) Numéro de dépôt: **97921785.8**

(22) Date de dépôt: **25.04.1997**

(51) Int Cl.⁷: **G01S 13/58**

(86) Numéro de dépôt international:
**PCT/EP97/02156**

(87) Numéro de publication internationale:
**WO 97/43663 (20.11.1997 Gazette 1997/50)**

(54) **PROCEDE ET DISPOSITIF DE MESURE DE LA DISTANCE D'UN OBJET PAR RAPPORT A UN APPAREIL DE MESURE DE CETTE DISTANCE**

VERFAHREN, VORRICHTUNG UND GERÄT ZUM MESSEN DES ABSTANDS ZWISCHEN EINEM GEGENSTAND UND EINEM GERÄT

METHOD AND DEVICE FOR MEASURING THE DISTANCE BETWEEN AN OBJECT AND AN APPARATUS FOR MEASURING SAID DISTANCE

(84) Etats contractants désignés:
**DE GB**

(30) Priorité: **14.05.1996  FR 9605999**

(43) Date de publication de la demande:
**10.03.1999  Bulletin 1999/10**

(73) Titulaire: **SIEMENS AUTOMOTIVE S.A.**
**31036 Toulouse Cédex (FR)**

(72) Inventeur: **KUNERT, Martin**
**D-93102 Geisling (DE)**

(74) Mandataire: **Zedlitz, Peter et al**
**Patentanwalt,**
**Postfach 22 13 17**
**80503 München (DE)**

(56) Documents cités:
**DE-A- 3 917 794          DE-C- 4 403 190**

EP 0 900 390 B1

**Description**

La présente invention est relative à un procédé de mesure de la distance d'un objet par rapport à un appareil de mesure de cette distance et, plus particulièrement, à un tel procédé mis en oeuvre avec un appareil de mesure délivrant à la fois une mesure brute de ladite distance et une mesure brute de la vitesse relative dudit objet par rapport à l'appareil. L'invention est aussi relative à un dispositif pour la mise en oeuvre de ce procédé.

On connaît, par exemple du livre intitulé "Introduction to radar systems" de M.I. SKOLNIK édité en 1962 aux USA par Mc Graw-Hill, pages 86 et suivantes, un radar à ondes continues modulées en fréquence de manière périodique, plus communément connu sous sa dénomination anglo-saxonne de radar FMCW, pour la mesure de la distance et de la vitesse relative d'un objet. On connaît aussi de la demande de brevet allemand DE-A-40 40 572, l'emploi d'un tel radar pour la mesure des distances et vitesses de véhicules automobiles. Selon le procédé employé dans la technique antérieure, on module une fréquence porteuse par un signal triangulaire par exemple, on émet en continu ce signal modulé et on mélange une fraction de ce signal avec le signal réfléchi par l'objet dont la distance et la vitesse sont à mesurer. On obtient ainsi deux fréquences de battement correspondant respectivement à la rampe montante et à la rampe descendante du signal de modulation du signal émis. A l'issue de chaque période de modulation, on tire la distance et la vitesse de la moyenne et de la différence respectivement, des fréquences de battement.

Les valeurs brutes de distance et de vitesse ainsi obtenues sont entachées d'un bruit de fond, quasi gaussien. Ce bruit de fond introduit une erreur dans les valeurs fournies, de l'ordre du mètre en ce qui concerne les distances par exemple. Une telle erreur ne peut être considérée comme négligeable dans certaines applications, notamment lorsque le radar fait partie d'un dispositif anti-collision équipant un véhicule automobile. Aussi filtre-t-on les mesures de distance délivrées par le radar pour les débarrasser de l'imprécision due au bruit de fond. On réalise préférentiellement le filtrage à l'aide de filtres adaptatifs linéaires du type "Kalman", basés sur les écarts d'un système physique par rapport à un modèle défini par ses variables d'état. De tels filtres sont décrits par exemple dans l'ouvrage intitulé "Le filtrage et ses applications", édition CEPADUES 1987, auteurs : M. Labarrère, J.P. Krief, B. Gimonet. Les filtres de Kalman sont préférés car ils altèrent peu le signal traité. Par contre, ils ont l'inconvénient d'exiger une forte puissance de calcul du fait de leur complexité.

La présente invention a pour but de fournir un procédé et un dispositif de mesure de la distance d'un objet par rapport à un appareil de mesure de cette distance, qui permettent d'obtenir une mesure précise de ladite distance, sans recours à un filtrage complexe, et donc coûteux, du signal brut de distance délivré par le radar.

On atteint ce but de l'invention, ainsi que d'autres qui apparaîtront à la lecture de la description qui va suivre, avec un procédé de mesure de la distance d'un objet par rapport à un appareil de mesure délivrant à la fois une mesure brute de ladite distance et une mesure brute de la vitesse relative dudit objet par rapport à l'appareil, ce procédé étant remarquable en ce qu'on intègre ladite mesure de vitesse sur un intervalle de temps glissant prédéterminé, on forme la différence de la mesure brute de distance et de la vitesse intégrée, on calcule la moyenne de ladite différence sur ledit intervalle de temps et on ajoute la moyenne calculée à la vitesse intégrée pour former une mesure filtrée de la distance.

Comme on le verra plus loin, l'intégration de la vitesse opérée suivant l'invention assure un filtrage simultané et automatique de la mesure de vitesse délivrée par l'appareil de mesure, alors que le calcul de moyenne assure lui aussi un filtrage, ces deux filtrages intrinsèques permettant de supprimer l'emploi de moyens de filtrage spécifiques coûteux tout en autorisant la délivrance d'une mesure précise de la distance.

D'autres caractéristiques et avantages de la présente invention apparaîtront à la lecture de la description qui va suivre et à l'examen du dessin annexé dans lequel :

- la figure 1 est un schéma fonctionnel d'un dispositif pour la mise en oeuvre du procédé suivant l'invention, et
- les figures 2 à 4 sont des graphes utiles à la description du procédé suivant l'invention.

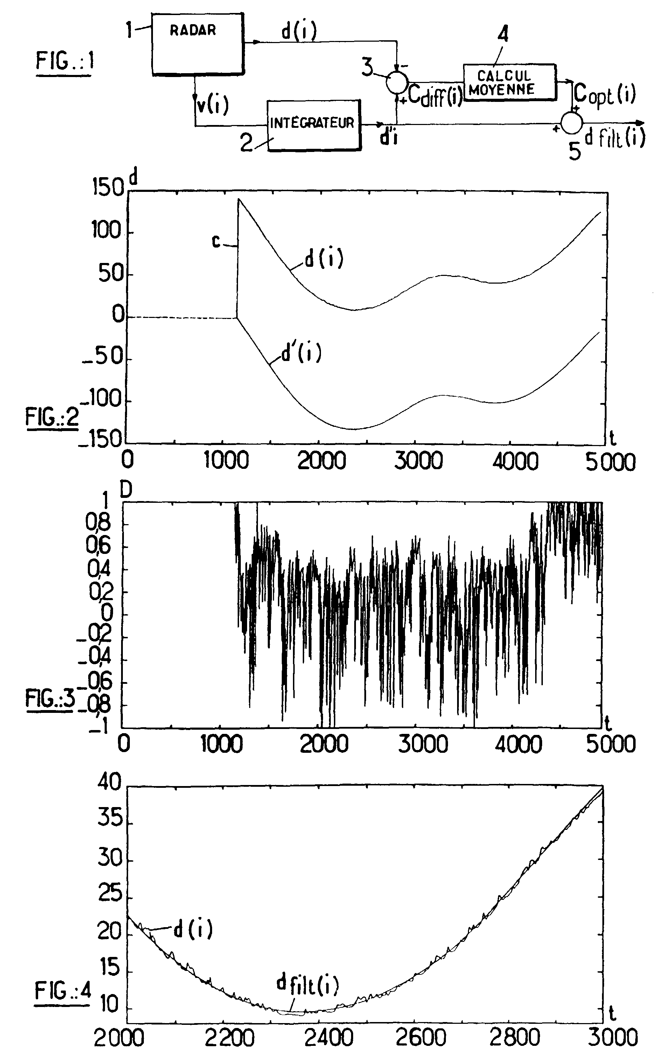

On se réfère à la figure 1 du dessin annexé où le dispositif représenté comprend classiquement, à titre d'exemple illustratif et non limitatif, un appareil de mesure 1 constitué, par exemple, par un radar du type FMCW évoqué ci-dessus. Dans l'application anti-collision également évoquée ci-dessus, la fréquence porteuse d'un tel radar est couramment de 77 GHz. Le radar délivre classiquement des échantillons courant d(i) et v(i) (i étant l'ordre de l'échantillon) de mesures de la distance et de la vitesse relative respectivement, d'un objet en déplacement par rapport au radar, la période Tm d'échantillonnage (ou période de mesure) étant typiquement de l'ordre de 60 ms. Comme on l'a vu plus haut, ces mesures, et notamment la mesure d(i) de distance, sont affectées d'une forte imprécision due à un bruit d'origine gaussien, au point que cette mesure brute de distance est difficilement utilisable lorsqu'on recherche une précision inférieure au mètre, comme c'est le cas lorsqu'il s'agit d'un radar embarqué sur un véhicule automobile pour empêcher toute collision entre ce véhicule et d'autres véhicules ou autres obstacles présents sur sa trajectoire.

Suivant l'invention, on tire une mesure de la distance, de précision améliorée, d'une intégration de la mesure de vitesse v(i) fournie par le radar et d'une évaluation de la différence entre la valeur de cette intégrale et la mesure brute de distance d(i) fournie par le radar, de manière à estimer la valeur de la constante d'intégration.

Cette constante C apparaît dans l'expression qui relie classiquement la distance d et la vitesse v d'un mobile :

$$d = \int v dt + C$$

Sur la figure 2 où l'on a représenté l'évolution dans le temps (l'unité de temps étant la période de mesure Tm) de la mesure brute d(i) fournie par le radar et l'intégrale d'(i) de la vitesse, cette constante C apparaît comme représentant la distance verticale, à un instant quelconque t, des deux graphes.

On revient à la figure 1 pour décrire le calcul, selon l'invention, de ladite constante d'intégration. Les échantillons v(i) de la mesure de vitesse réalisée par le radar sont fournis à un intégrateur 2 qui fournit un signal de sortie :

$$d'(i) = \sum_{i=0}^{k} v(i) \cdot \Delta t$$

l'intégration s'opérant alors à chaque instant sur un échantillonnage glissant de k échantillons consécutifs fournis à la cadence de mesure du radar, de période $\Delta t$ = Tm.

On forme en 3 la différence :

$$C_{dif} = d'(i) - d(i)$$

du signal d'(i) et du signal d(i) délivré par le radar à la même cadence de mesure.

On calcule la moyenne de cette différence sur k échantillons dans un bloc 4 qui délivre une valeur échantillonnée et optimalisée de la constante recherchée telle que :

$$C_{opt}(i) = \frac{1}{k+1} \sum_{i=0}^{k} C_{dif}(i)$$

et cette valeur est ajoutée en 5 au signal d'(i) délivré par l'intégrateur 2 pour former le signal de mesure de la distance filtrée $d_{filt}$ recherchée :

$$d_{filt}(i) = d'(i) + C_{opt}(i)$$

On constate que, dans ces opérations, le bruit de fond quasi gaussien affectant le signal de mesure v(i) de la vitesse fournie par le radar est filtré lors de son traitement dans l'intégrateur 2, du fait de la valeur moyenne nulle de ce bruit gaussien. Ce bruit est visualisé à la figure 3 du dessin annexé où le graphe représenté est celui de la différence D (en mètres) entre la vitesse intégrée additionnée à la constante $C_{opt}$, et la distance brute mesurée par le radar, affectée par ce bruit, d'une variance de 80 cm² environ.

De même le bruit affectant le signal de mesure d(i) est éliminé dans la constante $C_{opt}(i)$ par l'effet de la moyenne réalisée dans le bloc 4. Ainsi, suivant l'invention, toutes les composantes du signal $d_{filt}(i)$ délivré par le dispositif de la figure 1 subissent un filtrage intrinsèque propre à les débarrasser des composantes de bruit qui affectent la précision des mesures brutes délivrées par le radar. Le signal $d_{filt}(i)$ donne ainsi une mesure filtrée de la distance objet/radar. Ce filtrage apparaît sur la figure 4 où l'on a représenté une portion des graphes de d(i) et de $d_{filt}(i)$ avec une amplification de l'échelle des distances. La précision de $d_{filt}$ en est améliorée, et ceci sans recours à des moyens de filtrage spécifiques coûteux.

Bien entendu l'invention n'est pas limitée au mode de réalisation décrit et représenté qui n'a été donné qu'à titre d'exemple. C'est ainsi que l'appareil de mesure utilisé peut être aussi constitué par un radar Doppler à impulsions et, plus généralement, par tout appareil susceptible de fournir des mesures de la distance et de la vitesse relative d'un objet.

## Revendications

1. Procédé de mesure de la distance ($d_{filt}$) d'un objet par rapport à un appareil de mesure (1) délivrant à la fois une mesure brute d(i) de ladite distance et une mesure brute v(i) de la vitesse relative dudit objet par rapport à l'appareil (1), caractérisé en ce qu'on intègre ladite mesure de vitesse v(i) sur un intervalle de temps glissant prédéterminé, on forme la différence de la mesure brute d(i) de distance et de l'intégrale d'(i) de la vitesse, on calcule une valeur moyenne ($C_{dif}$) de ladite différence sur ledit intervalle de temps et on ajoute la moyenne calculée ($C_{opt}$) à l'intégrale d'(i) de la vitesse pour former une mesure filtrée ($d_{filt}$) de la distance objet/appareil de mesure.

2. Dispositif pour la mise en oeuvre du procédé conforme à la revendication 1, caractérisé en ce qu'il comprend a) un appareil de mesure (1) délivrant à la fois une mesure brute d(i) de la distance objet/appareil et une mesure brute v(i) de la vitesse relative de l'objet par rapport à l'appareil, b) un intégrateur (2) alimenté par le signal de vitesse brute v(i) délivré par l'appareil (1), c) un bloc (4) de calcul de

la moyenne $C_{opt}$(i) de la différence entre la mesure brute de distance d(i) et la sortie d'(i) de l'intégrateur (2), et d) des moyens (5) pour former une mesure filtrée ($d_{filt}$) de la distance objet/appareil par addition de la moyenne $C_{opt}$(i) à la sortie de l'intégrateur (2).

3. Dispositif conforme à la revendication 2, caractérisé en ce que l'appareil de mesure (1) est un radar à ondes continues modulées en fréquence (FMCW).

4. Dispositif conforme à la revendication 2, caractérisé en ce que l'appareil de mesure (1) est constitué par un radar Doppler à impulsions.

5. Utilisation du dispositif conforme à l'une quelconque des revendications 2 à 4 dans un véhicule automobile, pour mesurer la distance séparant le véhicule d'un obstacle éventuel placé sur sa trajectoire.


**Patentansprüche**

1. Verfahren zum Messen des Abstandes ($d_{filt}$) eines Gegenstandes von einem Meßgerät (1), das gleichzeitig ein Rohmeßsignal d(i) dieses Abstandes und ein Rohmeßsignal v(i) der Geschwindigkeit des Gegenstandes relativ zu dem Meßgerät (1) liefert, dadurch gekennzeichnet, daß man dieses Rohmeßsignal der Geschwindigkeit v(i) über einem vorgegebenen gleitenden Zeitintervall integriert, daß man die Differenz zwischen dem Abstands-Rohmeßsignal d(i) und dem Geschwindigkeitsintegral d'(i) bildet, daß man einen Mittelwert ($C_{dif}$) dieser Differenz über diesem Zeitintervall berechnet und daß man den berechneten Mittelwert ($C_{opt}$) zu dem Geschwindigkeitsintegral d'(i) addiert, um ein gefiltertes Meßsignal ($d_{filt}$) des Abstandes Gegenstand/Meßgerät zu bilden.

2. Vorrichtung zum Durchführen des Verfahrens nach Anspruch 1, dadurch gekennzeichnet, daß sie aufweist: a) ein Meßgerät (1), das gleichzeitig eine Rohmessung d(i) des Abstandes Gegenstand/Gerät und einer Rohmessung v(i) der Geschwindigkeit des Gegenstandes relativ zu dem Gerät liefert, b) ein Integrierglied (2), dem das von dem Gerät (1) gelieferte Rohgeschwindigkeitssignal v(i) zugeführt wird, c) ein Rechenglied (4) zum Berechnen des Mittelwerts $C_{opt}$(i) der Differenz zwischen der Abstandsrohmessung d(i) und dem Ausgangssignal d'(i) des Integriergliedes (2) und d) Mittel (5) zum Bilden einer gefilterten Messung ($d_{filt}$) des Abstandes Gegenstand/Gerät durch Addition des Mittelwertes $C_{opt}$(i) am Ausgang des Integriergliedes (2).

3. Vorrichtung nach Anspruch 2, dadurch gekennzeichnet, daß das Meßgerät (1) ein Radargerät mit freuquenzmodulierten kontinuierlichen Wellen (FMCW) ist.

4. Vorrichtung nach Anspruch 2, dadurch gekennzeichnet, daß das Meßgerät (1) von einem Impuls-Doppler-Radargerät gebildet wird.

5. Verwendung der Vorrichtung gemäß einem der Ansprüche 2 bis 4 in einem Kraftfahrzeug zum Messen des Abstandes, der das Fahrzeug von einem möglicherweise in seiner Bewegungsbahn befindlichen Hindernis trennt.


**Claims**

1. Method for measuring the distance ($d_{filt}$) between an object and a measuring apparatus (1) which supplies both a rough measurement d(i) of said distance and a rough measurement v(i) of the relative speed of said object with respect to the apparatus (1), characterised in that said speed measurement v(i) is integrated over a predetermined sliding time slot, the difference between the rough distance measurement d(i) and the integral d'(i) of the speed is obtained, a mean value ($C_{dif}$) of said difference is calculated over said time slot and the calculated mean ($C_{opt}$) is added to the integral d'(i) of the speed to form a filtered measurement ($d_{filt}$) of the distance between the object and the measuring apparatus.

2. Device for carrying out the method according to claim 1, characterised in that it comprises

   a) a measuring apparatus (1) which supplies both a rough measurement d(i) of the distance between the object and the apparatus and a rough measurement v(i) of the relative speed of the object with respect to the apparatus,

   b) an integrator (2) supplied by the rough speed signal v(i) supplied by the apparatus (1),

   c) a unit (4) for calculating the mean value $C_{opt}$(i) of the difference between the rough distance measurement d(i) and the output v(i) of the integrator (2), and

   d) a means (5) for obtaining a filtered measurement ($d_{filt}$) of the distance between the object and the apparatus by addition of the mean value $C_{opt}$(i) to the output of the integrator (2).

3. Device according to claim 2, characterised in that the measuring apparatus (1) is a frequency-modulated continuous wave radar (FMCW).

4. Device according to claim 2, characterised in that the measuring apparatus (1) consists of a pulsed Doppler radar.

5. Use of the device according to any one of claims 2 to 4 in a motor vehicle, for measuring the distance between the vehicle and a possible obstacle placed in its path.

FIG.:1

FIG.:2

FIG.:3

FIG.:4